# EUROPÄISCHE PATENTSCHRIFT

(11) **EP 4 472 426 B1**
(45) Veröffentlichungstag und Bekanntmachung des Hinweises auf die Patenterteilung: **20.08.2025**
(21) Anmeldenummer: 23707647.6
(22) Anmeldetag: 20.01.2023
(51) Int. Cl.: A23C 20/02, A23L 29/269, A23L 13/40, A23L 33/185

(54) **PFLANZENBASIERTE AUFSCHNITTFLEISCHIMITATE UND VERFAHREN ZU DEREN HERSTELLUNG**
PLANT-BASED IMITATION COLD CUTS AND PROCESS FOR PRODUCTION THEREOF
VIANDES D'IMITATION EN TRANCHES À BASE DE PLANTES ET PROCÉDÉ PERMETTANT DE LES FABRIQUER

(30) Priorität: 02.02.2022 WO PCT/EP2022/052499
(43) Veröffentlichungstag der Anmeldung: 11.12.2024
(73) Patentinhaber: Hilcona AG, 9494 Schaan (LI)
(72) Erfinder: SACKERS, Julia Carolin, 9494 Schaan (LI)
(74) Vertreter: Leimgruber, Fabian Alfred Rupert
(86) Internationale Anmeldenummer: PCT/EP2023/051364
(87) Internationale Veröffentlichungsnummer: WO 2023/148017

(56) Entgegenhaltungen:
- JP-A- 2010 142 181
- US-A- 4 647 470
- US-A- 5 190 927
- US-A1- 2008 145 505
- US-A1- 2020 323 231
- GEORGE R SANDERSON ET AL: "Laboratory-produced microbial polysaccharide has many potential food applications as a gelling, stabilizing, and texturizing agent", FOOD TECHNOLOGY,, vol. 37, 1 April 1983 (1983-04-01), pages 62 - 70, XP001349461
- MAO R ET AL: "Texture properties of high and low acyl mixed gellan gels", CARBOHYDRATE POLYMERS, APPLIED SCIENCE PUBLISHERS , LTD BARKING, GB, vol. 41, no. 4, 1 April 2000 (2000-04-01), pages 331 - 338, XP004244365, ISSN: 0144-8617, DOI: 10.1016/S0144-8617(99)00108-3

## Beschreibung

### Gebiet der Erfindung

Die Erfindung betrifft pflanzenbasierte Aufschnittfleischimitate und/oder Aufschnittfleischersatzprodukte und ein Verfahren zu deren Herstellung. Insbesondere betrifft die Erfindung ein Verfahren zur Herstellung von Aufschnittprodukten aus Fleischersatz oder Fleischimitat basierend auf pflanzlichen Rohstoffen, ebenso wie die Produkte, welche durch das Verfahren hergestellt werden und deren Verwendung.

### Hintergrund der Erfindung

Als pflanzenbasierte Aufschnittfleischimitate werden im Folgenden Aufschnittsprodukte aus Fleischersatz oder Fleischimitat verstanden, welche von der Konsistenz bzw. Bissfestigkeit und den Geschmack von auf Fleisch basierten Aufschnittsprodukte möglichst ähnlich sind, allerdings keine Fleischrohstoffe beinhalten. Das heisst, als *Fleischersatz, Fleischalternative* oder *Fleischimitat* wird im Folgenden Lebensmittel bzw. Ersatzlebensmittel bezeichnet, die geschmacklich, haptisch oder vom Proteingehalt her Fleisch ähneln, ohne aus Fleisch von herkömmlichen Schlachttieren hergestellt zu sein. Als Definition für Fleischersatz kann auch die von der OECD (Organisation for Economic Co-operation and Development) verwendete Definition dienen, wobei als Fleischersatz verarbeitete Produkte verstanden werden, die Fleisch in Bezug auf technische (Geschmack, Textur, Aussehen) und ernährungsphysiologische Eigenschaften nachahmen. Es können sowohl vegetarische als auch vegane Lebensmittel als Ersatzprodukte tierischen ähneln oder diese nachahmen, weshalb der Begriff Fleischersatz sehr unterschiedliche Lebensmittel umfassen kann - von festfleischigen, aromatischen Pilzen wie Austernseitling, Gemüse wie Sellerie über glutamatreiche Würzmittel wie Sojasauce, proteinreiche, aber geschmacksneutrale Pflanzenprodukte wie Tofu, Tempeh und Seitan bis hin zu nur industriell herstellbaren Imitatprodukten aus texturiertem Soja, Quorn, Milch, Eiklar, Erbsen und weiteren Hauptzutaten. Neben pflanzenbasierten, werden auch insektenbasierte und in Zellkultur hergestellte Produkte unter dem Begriff Fleischalternativen subsumiert. Dabei werden pflanzenbasierte Alternativen aus Pflanzenproteinen und anderen pflanzlichen Zutaten hergestellt, insektenbasierte Alternativen aus Insektenprotein als Hauptproteinquelle sowie Zellkulturfleisch, also Fleischersatz, der mit tierischen Zellen in vitro hergestellt wird, aus Zellkulturprotein. Fleischersatz hat häufig den Vorteil eine bessere Umweltbilanz als Fleisch aufweisen zu können. Die Verwendung von Fleischersatz kann aber auch andere Gründe und Vorteile haben. So gehen Gerichte wie das Steckrübenschnitzel auf Notzeiten zurück und die Maggi-Würze wurden entwickelt, um die Ernährung armer Bevölkerungsschichten zu verbessern, die sich kein Fleisch leisten konnten. Ausgehend vom Vegetarismus und der Reformküche werden häufig auch aus ethischen und gesundheitlichen Gründen Rezepte und Zutaten entwickelt, die Fleischgerichte und Fleischprodukte imitieren, wie z.B. Bratlinge und Hefeextrakt.

Im Stand der Technik wird unter *Aufschnitt* (auch als Charcuterie bezeichnet), geschnittene und zum direkten Verzehr geeignete Wurstwaren, Schinken, oder Braten verstanden. Meistens wird Aufschnitt als Brotbelag verwendet. In Metzgereien und an Fleischtheken in Supermärkten wird Aufschnitt typischerweise mit einer Aufschnittschneidemaschine frisch geschnitten verkauft. Die Lebensmittelindustrie stellt Aufschnitt auch aus grösseren Stücken her und verkauft die Ware in luftdichten Verpackungen unter Schutzatmosphäre. Unter Aufschnittfleischimitat wird im Folgenden entsprechend Aufschnitt aus Fleischersatzprodukten verstanden, bei welchen von einem grösseren Stück oder Block eines Fleischersatzproduktes abgeschnittene und zum direkten Verzehr geeignete Scheiben erzeugt werden. Aufschnittfleischimitat ist demnach ein pflanzenbasiertes Ersatzprodukt für Aufschnitt fleischlicher, d.h. tierischer, Herkunft, wobei unter Fleisch hierin alle geniessbaren Tierkörperteile der zur Lebensmittelgewinnung zulässigen Tierarten verstanden werden soll.

Nicht unter Aufschnittfleischimitate und/oder Aufschnittfleischersatzprodukte gemäss dieser Beschreibung fallen Produkte aus der Formfleischzubereitungen oder Formfleischerzeugnisse (auch restrukturiert oder Analogflisch oder Klebefleisch genannt), welche aus Fleischstücken (d.h. nicht Fleischersatz), z.T. nach mechanischer Bearbeitung (Scheffel / Kutter) zur Freisetzung von Muskeleiweiss an den Oberflächen unter Zusatz von Kochsalz / Nitritpökelsalz und/oder Zusatzstoffen und/oder Enzymen hergestellt. Die Fleischstücke werden weiterbearbeitet (Tumbeln, Poltern, Mengen, Kneten) und zu einem grösseren Stück zusammengefügt. Die Gewebestruktur der verwendeten Fleischstücke bleibt im Wesentlichen erhalten, weshalb sie technisch andere Eigenschaften besitzen als fleischersatz-basierte Produkte, wie dem Fachmann bekannt ist. Unter Formfleischerzeugnisse oder rekonstruierte Fleischerzeugnisse werden hierin auch Fleischerzeugnisse aus Sulz verstanden, bei welchem rohes oder gepökeltes Fleisch in einer Brühe gegart wird, und dann in einer Form gekühlt wird, bis das Erzeugnis zu einem Block erstarrt. Auch hier bleibt die Gewebestruktur der verwendeten Fleischstücke im Wesentlichen erhalten, weshalb sie technisch andere Eigenschaften besitzen als fleischersatz-basierte Produkte (Fleischimitate), wie dem Fachmann bekannt ist.

Wie bereits oben ausgeführt, sind im Stand der Technik eine Vielzahl von vegetarischen oder veganen Ersatzprodukten für Lebensmittel tierischen Ursprungs, d.h. Fleisch oder Fleischprodukte, bekannt. Dabei geht es im Wesentlichen darum, das tierische Protein durch pflanzliches Protein zu ersetzen. Gängige Fleischersatz- oder Fleischimitatprodukte können z.B. auf pflanzlichen Rohstoffen (z.B. Seiten aus Weizengluten oder Tofu aus Sojamilch) und/oder tierischen Rohstoffen (z.B. auf Milchbasis) und/oder mikrobiologischen Rohstoffen (z.B. Myzel von Schimmelpilzen) basieren.

Zur Herstellung eines fleischähnlichen, jedoch rein pflanzlichen Lebensmittelkörpers, der eine zum Aufschneiden in Scheiben unterschiedlicher Dicke geeignete Konsistenz hat, wird neben pflanzlichem Protein, Farb- und Aromastoffen vor allem ein Geliermittel benötigt. Dieses Geliermittel muss für ein vegetarisches und vor allem ein veganes Produkt ebenfalls rein pflanzlichen Ursprungs sein. Im Stand der Technik ist eine Vielzahl von Geliermitteln bekannt, wie z. B. Stärke, Alginate, Agar, Gellan u.vm. Gellan als Geliermittel für ein Fleischersatzprodukt ist z.B. aus JP20190130923 bekannt. Gellan zur Verwendung in vegetarischen und veganen Lebensmitteln ist in verschiedenen Varianten z.B. von der Firma Kelco unter der Bezeichnung Kelcogel auf dem Markt erhältlich. Allerdings erreichen die bekannten Ersatzprodukte in verschiedener Hinsicht nicht die angestrebte Ähnlichkeit mit dem tierischen Produkt, sei es wegen ihrer Konsistenz oder wegen nicht allgemein akzeptierter Ausgangsstoffe, wie z.B. Pilze, etc.

Das Dokument G.R. Sanderson et al., "Laboratory-produced microbial polysaccharide has many potential food applications as a gelling, stabilizing, and texturizing agent", Food Technology, Bd. 37, April 1983, S. 62-70, aus dem Stand der Technik offenbart eine Fleischsülze (die in Scheiben geschnitten werden kann) aus 21% Wasser, 1% NaCl, 0.3% Maggi Fleisch-Aroma (mit pflanzlichem Eiweiss), 0.3% nieder akyliertes geklärtem Gellan. Gellan wird mit Wasser vermischt und auf 76,6°C erhitzt, dann werden Salz und Fleischaroma dazugegeben und in Container gegossen. Das Dokument US 4647470 A, ebenfalls aus dem Stand der Technik, offenbart eine Fleischsülze (die in Scheiben geschnitten werden kann) aus 98% Wasser, 1 % NaCl, 0,3% Fleisch-Aroma (Maggi), 0.25% geklärtem Gellan, 0.05% Xanthan, 0.05% LBG (Carubin) sowie 41.3% Koshian. Bei dem Gellan handelt es sich um Gellan mit einem Acetylgehalt von 0 - 0.3%, d.h. niedrig akyliertem Gellan. Die 3 Verdickungsmittel werden mit Wasser vermischt und auf 76.6°C erhitzt, die restlichen Zutaten werden zugegeben und die Mischung wird in Container gegeben und auf Raumtemperatur abgekühlt. Weiter offenbart US 2020/323231 A1 ein milchfreies Käseanalogprodukt das geschnitten werden kann und aus 0,2-5% hoch akyliertem Gellan besteht. Das hoch akylierte Gellan kann aus einer Mischung aus hoch akyliertem Gellan und niedrig akyliertem Gellan bestehen. Das Produkt kann 8-16% pflanz. Protein (z.B. in Form von Proteinisolat), Stärke und Pflanzenöl enthalten. Wasser, Erbsenproteinisolat, Kokosnussöl und Kartoffelstärke und Sonnenblumenöl werden vermischt und bei 75°C für 5 min erhitzt. Hochakyliertes Gellan und Zucker werden hinzugefügt und bei 90°C für 10 min erhitzt und dann auf 4°C für 2h abgekühlt. JP 2010/142181 A offenbart ein Käseähnliches-Produkt (das in Scheiben geschnitten und gerieben werden kann) mit einem Proteingehalt von 10% oder weniger (wobei das Protein ausgewählt ist aus fettfreier Trockenmilch, Molke, Gemüseprotein wie Soja, Erbse oder Carob Gummi, wobei das Käseähnliche-Produkt (a) Dextrin aus Kartoffeln mit 2-5 DE (Dextrose Äquivalenten); (b) mindestens ein Verdickungsmitteln ausgewählt aus Karrageenan, Agar, LM Pektin, deakyliertes Gellan; und (c) ein Emulgator (Gummi arabicum, ghatti gummi, octenyl sucinylierte Stärke) enthält. Das deakylierte Gellan kann in einer Menge von 0.01-3% verwendet werden. Weiter offenbart US 2008/145505 A1 ein gummiartigen Süssigkeiten enthaltenen niedrig akyliertem Gellan. Das Dokument US 5190927 A offenbart ein Agar-Ersatz mit 3g Rinderextrakt, 5g Pepton, 4.9 g deakyliertes Gellan (0,49%), 2.1g geklärtes Gellan (hoch in Glycerat-/ niedrig im Acetat-Gehalt), 0,75 g MgCl₂ in 1L Wasser gelöst und bei 121°C für 15min autoklaviert wird. Schliesslich analysiert das Dokument Mao et al., "Texture properties of high and low acyl mixed gellan gels", Carbohydrate Polymers, Applied Science Publishers, Ldt Barking GB, Bd. 41, Nr. 4, April 2000, S. 331-338, den Effekt von verschieden Verhältnissen aus hoch-akyliertem und niedrig-akyliertem Gellan (50/50, 75/25, 25/75) auf die Gelstärke, Verformbarkeit und Festigkeit.

### Zusammenfassung der Erfindung

Es ist eine Aufgabe der vorliegenden Erfindung, pflanzenbasierte Aufschnittfleischimitate bereitzustellen, bei denen die Textur und Bissfestigkeit, sowie die Verwendung dem Fleischpendant ähnlicher ist als im Stand der Technik bekannt. Dabei soll mittels eines geeigneten Herstellungsverfahrens eine breite Palette an pflanzenbasierten Aufschnittfleischimitaten herstellbar sein. Die pflanzliche Basis soll vorzugsweise pflanzliches Protein enthalten, kann aber auch proteinfreien Pflanzenanteilen umfassen oder im Falle einer insektenbasierten Basis Insektenprotein bzw. im Falle einer zellkultur-basierten Basis aus Zellkulturprotein der in vitro hergestellten Zellen.

Gemäss der vorliegenden Erfindung werden diese Ziele insbesondere mit den Merkmalen der unabhängigen Ansprüche erreicht. Darüber hinaus können weitere vorteilhafte Ausführungsformen aus den abhängigen Ansprüchen und den zugehörigen Beschreibungen abgeleitet werden.

Für den Zweck dieser Beschreibung wird der Begriff Leitungswasser für Wasser verwendet, das eine gewisse Härte aufweist, die vor allem durch Calcium-Ionen bedingt ist. Entionisiertes bzw. entmineralisiertes, sowie auch destilliertes Wasser enthält demgegenüber keine oder eine vernachlässigbare Konzentration an Calcium-Ionen.

Der Begriff "Aktivierung" wird hier für das Einsetzen der Polymerisation des Geliermittels verwendet. Demnach entspricht dieser Begriff dem im Stand der Technik ebenfalls verwendeten Begriff Hydration oder Hydratation. Für Aktivierung ist eine bestimmte Temperatur notwendig, die sogenannte Aktivierungstemperatur oder Hydratationstemperatur, welche vom Ionengehalt des Wassers abhängt (siehe dazu unten).

Gemäß der vorliegenden Erfindung werden die oben genannten Ziele für pflanzenbasierte Aufschnittfleischimitate und Verfahren zur Herstellung solcher dadurch erreicht, dass das pflanzenbasierte Aufschnittfleischimitat Gellan einer pflanzlichen Basis und/oder Aroma und/oder Farbstoff und/oder Wasser enthält, wobei das Gellan ein niedrig acyliertes Gellan ist. Bei Verwendung von Leitungswasser kann z.B. ein Komplexbildner zugefügt sein. Der Komplexbildner kann z.B. ein Natriumcitrat sein. Die pflanzenbasierte Aufschnittfleischimitate umfasst pflanzliche Proteine. Das pflanzliche Protein kann z.B. texturiertes Pflanzenprotein umfassen. Das pflanzliche Protein kann z.B. weiter pulverförmiges Proteinkonzentrat umfassen. Das Aufschnittfleischimitat kann z.B. 0.5 - 4 Gew.% Gellan, 0.1-0.5 Gew.% Natriumcitrat und 3-30 Gew.% Protein, insbesondere pflanzliche oder insekten-basierte Proteine oder zellkultur-basiertes, enthält. Das Protein im Bereich von 3-30 Gew.% kann z.B. texturiertes Protein in einem Bereich von 3-30 Gew.% umfassen und 0-15 Gew.% weiteres Protein enthalten. Das Aufschnittfleischimitat kann weiter z.B. Gewürze, Gewürzextrakte und haltbarkeitsverlängernde Zusätze enthalten. Beim Verfahren zur Herstellung der pflanzenbasierten Aufschnittfleischimitate wird in einem ersten Schritt das niedrig acylierte Gellan im Bereich von 0.5-4 Gew.% mit Wasser und einer pflanzlichen Basis im Bereich von 3-30 Gew.% und ggf. Agar auf min. 90°C erhitzt, in einem zweiten Schritt werden weitere Zutaten, wie Farben, Aromen, Salz, eine weitere pflanzliche Proteinquelle, Säuren, Gewürze, Gewürzextrakte, haltbarkeitsverlängernde Zusätze vermischt und zugefügt, in einem dritten Schritt wird die Produktionsmasse in Formen gegossen, und im vierten Schritt wird die Produktionsmasse in den Formen abgekühlt, so dass sich das Gellan in den wahlweise geöffneten oder geschlossenen Formen verfestigt.

Die Erfindung hat u.a. den Vorteil, dass das erfindungsgemässe Produkt einen geringen Brennwert und Fettgehalt aufweist. Die nach dem vorliegenden Verfahren hergestellten pflanzenbasierten Aufschnittfleischimitate zeichnen sich durch eine hohe Festigkeit aus, die es ermöglicht hauchdünne Scheiben mit einer Dicke von weniger als 1mm zu schneiden. Trotzdem weist das Produkt eine hohe Saftigkeit auf. Durch das erfindungsgemässe Verfahren lassen sich mit dem niedrig akylierten Gellan unterschiedliche Texturen herstellen, um die Texturen unterschiedlicher Aufschnittssorten, wie beispielsweise Kochschinken, Rohschinken, Trockenfleisch, Pastrami, Rindersaftschinken nachbilden zu können. Die Erfindung wird durch die beiliegenden Ansprüche definiert.

### Kurzbeschreibung der Zeichnungen

Die vorliegende Erfindung wird im Folgenden anhand von Beispielen und unter Bezugnahme auf diese Zeichnungen näher erläutert, in denen:

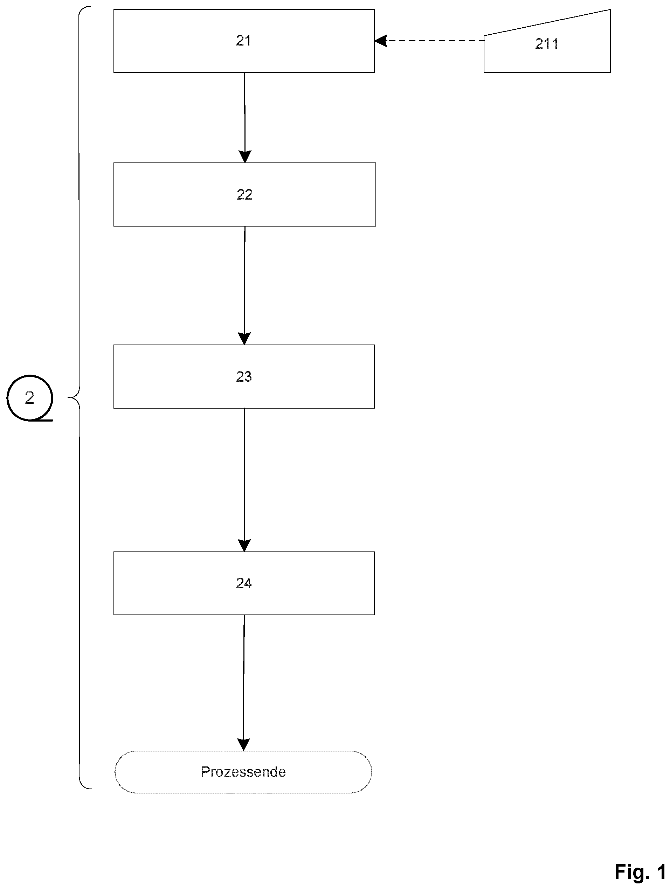

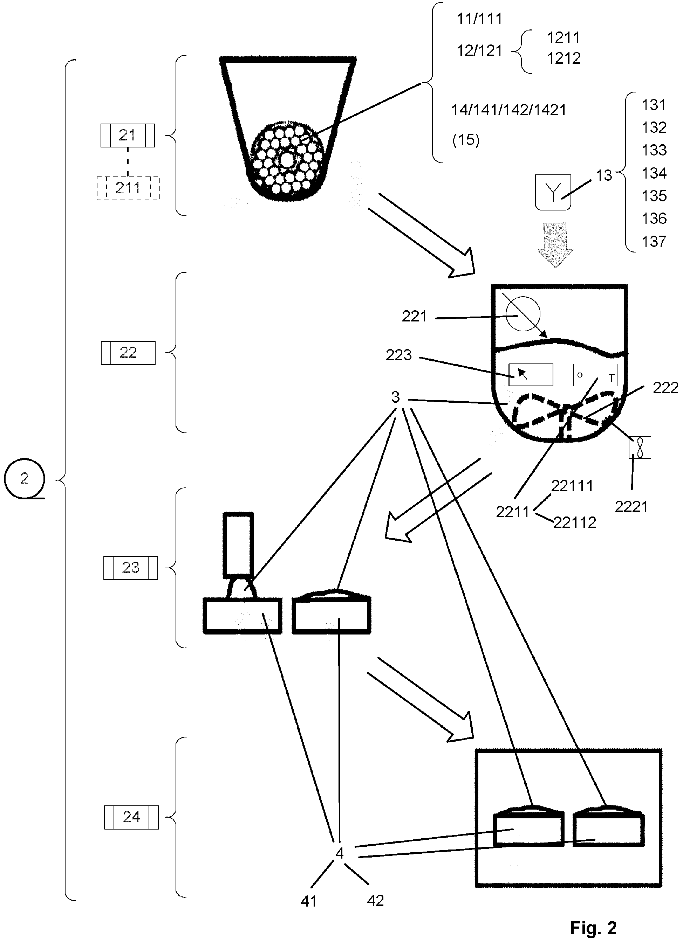

Figur 1 und 2 zeigt ein Blockdiagramm, das schematisch ein Herstellungsverfahren von pflanzenbasierten Aufschnittfleischimitaten 1 gemäss der Erfindung illustriert. In einem ersten Schritt 21 wird eine Produktionsmasse 3 umfassend niedrig acylierte Gellan 111 im Bereich von 0.5-4 Gew.%, Wasser 14 und eine pflanzliche Basis 12 im Bereich von 3-30 Gew.% und/oder Agar 15 (optionaler Schritt 211) auf min. 90°C erhitzt werden. In einem zweiten Schritt 22 werden weitere Zutaten 13 mindestens umfassend Farbstoffe 131 und/oder Aromen 132 und/oder Salz 133 und/oder eine weitere pflanzliche Proteinquelle 134 und/oder Säuren 135 und/oder Gewürze 136 und/oder Gewürzextrakte 136 und/oder haltbarkeitsverlängernde Zusätze 137 vermischt und/oder zugefügt. In einem dritten Schritt 23 wird die Produktionsmasse 3 in Formen 4 gegossen. In einem vierten Schritt 24 wird die Produktionsmasse 3 in den Formen 4 abgekühlt, so dass sich das Gellan 11 in den wahlweise geöffneten oder geschlossenen Formen 4 verfestigt.

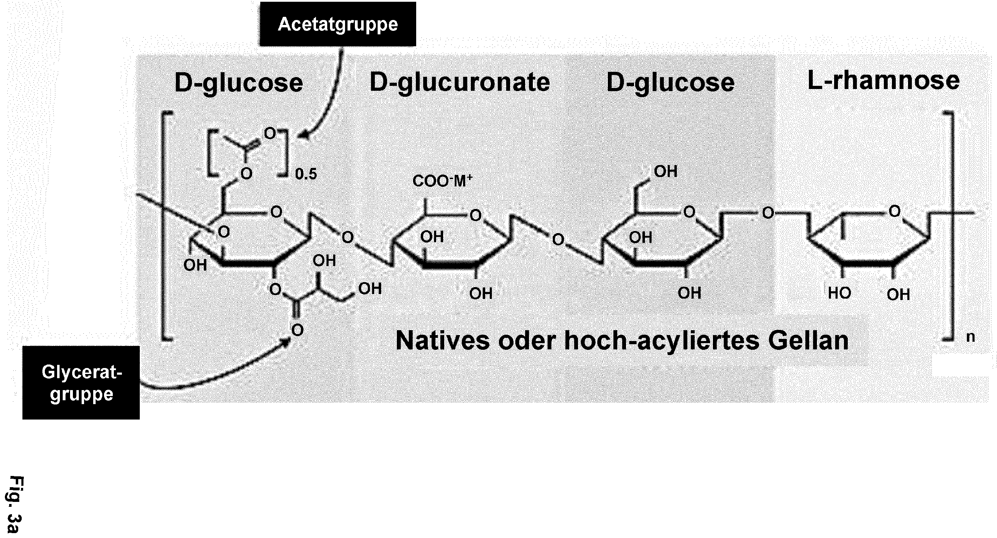

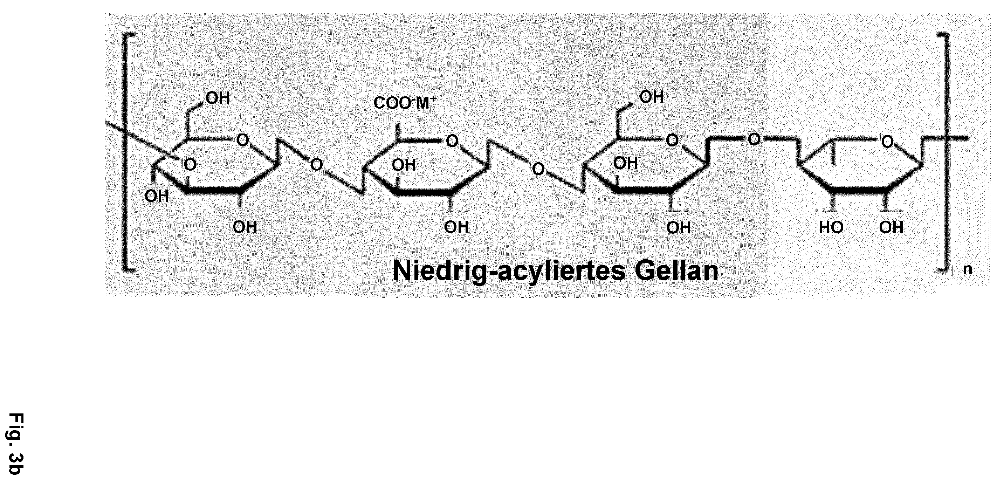

Figuren 3a/b zeigen beispielshaft das Prinzip der chemischen Struktur von Gellan mit der Wiederholung von Tetrasaccharideinheiten, wobei die Grundstruktur von Gellan die Hauptkette umfasst, die aus den sich wiederholenden Einheiten von vier Zuckern besteht. Zu den Einzelzuckern, die an der Bildung der sich wiederholenden Einheiten beteiligt sind, gehören, wie erwähnt, Glucose, Rhamnose und Glucuronsäure. Figur 3a zeigt hoch-acyliertes Gellan, wobei das Gellan (i) Seitenketten aus Acetatgruppen (jede 8. Glucose) und Glyceratgruppen (jede 4.) aufweist, und (ii) beide Seitengruppen an demselben Glucoserest angebunden sind. Figur 3b zeigt niedrig-acyliertes Gellan, das keine Seitenketten aufweist. Hoch- und niedrig-aycliertes Gellan unterschiedet sich in M(w) dadurch, dass hoch-aycliertes Gellan 1.000 - 2.000 kDa (Kilo Dalton) aufweist und niedrig-acyliertes Gellan 200-300 kDa. Der Begriff des niedrig-ayclierten Gellan bezieht sich also insbesondere auf das Molekülgewicht (atomare Masseneinheit) von 200-300 kDa.

### Detaillierte Beschreibung der bevorzugten Ausführungsformen

Figuren 1 und 2 zeigen schematisch ein Verfahren zur Herstellung von pflanzenbasierten Aufschnittfleischimitaten, das im Folgenden näher beschreiben werden soll. Ein zum Aufschneiden geeignetes Stück (Block) des Produkts mit pflanzlichem Protein umfasst folgende Inhaltsstoffe:
- Niedrig-acyliertes Gellan 111 im Bereich von 0.5-4 Gew.%
- Texturiertes Pflanzenprotein 1211 im Bereich von mindestens 3-30 Gew.%
- Weitere pflanzliche Proteine 121 im Bereich von mindestens 0-15 Gew.%
- Aroma 132, Farbe 131
- Wasser 14
- Im Fall von Leitungswasser 141 Natrium-Citrat 1421 im Bereich von 0.1-0.5 Gew.%

Gellan 11 ist ein Hydrokolloid bzw. ein Vielfachzucker, das z.B. auf pflanzlicher Basis mittels GMO-freien Mikroorganismen in zuckerhaltigen Lösungen produziert wird. Beispielsweise kann Gellan durch Fermentation von Kohlenhydraten durch den Bakterienstamm Pseudomonas Elodea hergestellt werden. Die Kulturbrühe wird durch Erhitzen deacyliert (Abspaltung der Estergruppen) und daraus das Gellan mit Isopropylalkohol ausgefällt, danach getrocknet und gemahlen. Aus den Fermentationsprozessen können kleine Mengen stickstoffhaltiger Rückstände im Produkt zurück. Gellan ist kein Novel Food und die WHO (World Health Organization) erteilte Gellan einen uneingeschränkten ADI (Acceptable Daily Intake (duldbare tägliche Aufnahmemenge). In der Lebensmittelindustrie wird Gellan als ein Lebensmittelzusatzstoff verwendet, der als Geliermittel und Verdickungsmittel eingesetzt wird. Gellan ist unter der europäischen Zulassungsnummer E418 für Lebensmittelzusatzstoffe zugelassen.

Bei Gellan, insbesondere kommerziell erhältlichem Gellan, kann unterschieden werden zwischen niedrig acyliertem Gellan (LA Gellan), wobei niedrig acyliertes Gellan dadurch definiert ist, dass es keine Seitenketten besitzt (oder mindestens im Wesentlichen keine Seitenketten), und hoch acyliertes Gellan (HA Gellan) dadurch, dass es Seitenketten aus Acetat- und/oder Glyceratgruppen besitzt. Dieser Definition wird in hierin gefolgt. Weiter versteht man unter Acylieren das Einführen einer Acylgruppe [-C(=O)-R] in eine bestehende chemische Verbindung, typischerweise eine organische Verbindung. Gellan gehört zu den Kohlenhydraten und im engeren Sinn zu den Polysacchariden. Gellan ist linear aufgebaut, besteht aber im Gegensatz zu bekannteren linearen Polysacchariden wie Cellulose oder Amylose, die nur aus einem einzigen identischen Baustein bestehen, aus mehreren verschiedenen Bausteinen. So besteht Gellan aus einer Rhamnose-, einer Glucuronsäure- und zwei Glucose-Grundeinheiten, die mit Essigsäure und Glycerinsäure verestert sind. Die Glucuronsäure liegt als gemischtes Kalium-, Calcium-, Natrium- und Magnesiumsalz vor. Figuren 3a/b zeigen beispielshaft das Prinzip der chemischen Struktur von Gellan mit der Wiederholung von Tetrasaccharideinheiten, wobei die Grundstruktur von Gellan die Hauptkette umfasst, die aus der sich wiederholenden Einheiten von vier Zuckern besteht. Zu den Einzelzuckern, die an der Bildung der sich wiederholenden Einheiten beteiligt sind, gehören, wie erwähnt, Glucose, Rhamnose und Glucuronsäure. In der ursprünglichen Form von Gellan, d. h. hoch acyliertes Gellan (Fig. 3a), existieren zwei Substituenten, darunter Acetylgruppen und Glycerylgruppen, nebeneinander. Beide Gruppen befinden sich auf demselben Glukoserest. Für jede sich wiederholende Einheit gibt es eine Glycerylgruppe, und für jeweils zwei sich wiederholende Einheiten gibt es eine Acetylgruppe. Bei niedrig acyliertem Gellan (Fig. 3b) sind die Acylgruppen vollständig entfernt. Die Acylgruppen haben einen erheblichen Einfluss auf die Eigenschaften des Gels. Gellan mit hohem Acylgehalt (hoch acyliertes Gellan) ergibt ein Gel, das weich, flexibel und nicht spröde ist, während Gellan mit niedrigem Acylgehalt (niedrig acyliertes Gellan) ein Gel ergibt, das fest, nicht flexibel, aber spröde ist. Somit ist dem Fachmann bekannt, dass die Verwendung von niedrig acyliertem Gellan zu einem festen und spröden Gelkörper führt. Sprödigkeit ist eine Eigenschaft, die den Gelkörper nicht für das Aufschneiden in Scheiben geeignet erscheinen lässt. Es wurde jedoch überraschend gefunden, dass mit dem erfindungsgemässen Herstellungsverfahren ein optimal zum Aufschneiden geeigneter Gelkörper erreicht wird.

Pflanzliche Proteine sind ebenfalls aus unterschiedlicher Herkunft und in unterschiedlicher Form im Handel erhältlich, beispielsweise als Granulat, Pulver etc. Als pflanzliche Proteine werden hierin Proteine bezeichnet, die nicht aus tierischen Erzeugnissen (Fisch, Fleisch und Milchprodukten), sondern aus pflanzlichen Produkten stammen. Proteine (Eiweiss) sind biologische Makromoleküle, die aus Aminosäuren aufgebaut sind, die durch Peptidbindungen verknüpft sind. Pflanzliche Proteine können z.B. aus Soja, Erbsen, Lupinen, Raps, Nüssen, Saaten bzw. Samen, wie z.B. Sonnenblumenkernen u.a.m. gewonnen werden. Erfindungsgemäss können für das vorliegende Aufschnittfleischimitat anstelle von pflanzlichen Proteinen, auch insekten-basierte Proteine oder zellkultur-basierte Proteine, insbesondere zellkultur-basierte Proteine basierend auf tierischen Ursprungszellen, verwendet werden, oder eine Mischung aus zwei oder drei der genannten Proteine.

Pflanzliches Protein wird beispielsweise wie folgt gewonnen: Das geerntete proteinhaltige pflanzliche Ausgangsmaterial wird mechanisch zerkleinert und entfettet. Es entstehen Flocken oder ein proteinreiches Pulver. Anschliessend wird unter Verwendung von Lösungsmitteln ein Proteinkonzentrat gewonnen, das ggf. weiter zu Proteinisolat gereinigt und aufkonzentriert wird. Die Flocken oder Pulver werden mit Wasser versetzt und angemaischt. Die proteinarmen Fasern und Feststoffe werden im nächsten Schritt z.B. mit Hilfe von Industriezentrifugen von der proteinreichen Lösung abgetrennt. Dann folgt die sogenannte Ausfällung. Hier wird der pH-Wert der proteinreichen Lösung auf den isoelektrischen Punkt eingestellt. Dadurch setzen sich die Proteinpartikel ab. Diese werden dann wiederum mittels Zentrifugen von der Lauge abgetrennt. Um möglichst alle Bestandteile der Mutterlauge aus dem ausgefällten und abgetrennten Protein zu entfernen, wird das Protein erneut mit Wasser versetzt und wieder mit Hilfe der Zentrifugalkraft abgetrennt.

Vorliegend dient die Textur von pflanzlichem Proteingranulat dazu, die Konsistenz des Endprodukts der gewünschten fleischähnlichen Konsistenz ähnlich zu machen. Das texturierte Pflanzenprotein wird in der Regel mit anderen, beispielweise pulverförmigen Proteinen ergänzt, um einen erwünschten Proteingehalt und eine opake Optik zu erzielen.

Wie sich aus dem Vorstehenden ergibt, ist die Art der Herstellung wesentlich. Ein bevorzugtes Verfahren zur Herstellung des Produkts umfasst folgende Schritte
1. In einem ersten Schritt 21 wird das Gellan in Wasser mit Na-Citrat, texturiertes Pflanzenprotein und Farbstoff gemischt und auf 80-120°C erhitzt. Sofern Leitungswasser verwendet wird, wird ein die enthaltenen Ionen neutralisierender Komplexbildner, bevorzugt Natriumcitrat, zugefügt 211. Bei Verwendung von entionisiertem Wasser ist dies nicht erforderlich.
2. In einem zweiten Schritt 22 werden Säuerungsmittel, Aromen, Salz und gegebenenfalls pflanzliches Proteinkonzentrat, haltbarkeitsverlängernde Zusätze, Gewürze, sowie Gewürzextrakte hinzugegeben. Farbstoff kann wahlweise auch in diesem zweiten Verfahrensschritt zugefügt werden.
3. In einem dritten Schritt 23 wird diese Masse ohne oder mit nur geringem Temperaturverlust in eine Form gegossen,
4. In einem letzten Schritt 24 wird es geschnitten und verpackt.

Optional wird das Produkt vor dem Aufschneiden fermentiert und/oder getrocknet.

Anstelle des Natriumcitrats können auch andere Komplexbildner verwendet werden, z.B. Kaliumcitrat, Tri-Natriumphosphat (TSP), Tri-Natriumpyrphosphat (TSPP), Natriumhexametaphosphat (SHMP), etc.

Bevorzugt umfassen somit die Zutaten texturiertes Pflanzenprotein, Na-Citrat, pflanzliche Proteine, Aroma und Farben. Vorteilhaft an dem erfindungsgemässen Produkt ist, dass es einen geringen Brennwert und Fettgehalt aufweist. Die nach dem vorliegenden Verfahren hergestellten pflanzenbasierten Aufschnittfleischimitate zeichnen sich durch eine hohe Festigkeit aus, die es ermöglicht hauchdünne Scheiben mit einer Dicke von weniger als 1mm zu schneiden. Trotzdem weist das Produkt eine hohe Saftigkeit auf. Durch das erfindungsgemässe Verfahren lassen sich mit dem niedrig acylierten Gellan unterschiedliche Texturen herstellen, um die Texturen unterschiedlicher Aufschnittssorten, wie beispielsweise Kochschinken, Rohschinken, Trockenfleisch, Pastrami, Rindersaftschinken nachbilden zu können.

Ein besonders bevorzugtes Verfahren umfasst die Schritte:
- Mischen des Gellans in Leitungswasser mit Na-Citrat, texturiertem Pflanzenprotein und Farbstoff
- Erhitzen, zur Aktivierung des Gellans
- Zugabe der weiteren Zutaten
- gegebenenfalls Scheren, um das texturierte Pflanzenprotein auf die gewünschte Grösse zu zerkleinern
- Abgiessen in Formen (zügig und ohne oder mit nur geringem Temperaturverlust)
- Kühlen
- Gegebenenfalls Fermentieren oder/und Trocknen
- Aufschneiden und Verpacken

In einem ersten Schritt wird das Gellan mit Na-Citrat und/oder texturiertem Pflanzenprotein und eventueller Zugabe von Agar erhitzt. Es sollte hierbei mindestens eine Temperatur von 90°C erreicht werden. Es ist anzumerken, dass die Aktivierungstemperatur (Hydratationstemperatur) vom Ionengehalt abhängt und tiefer als 90°C sein kann. Eine Temperatur von mindestens 90° hat jedoch den technischen Effekt, dass die Viskosität der Masse das Giessen in Formen ermöglicht, d.h. also eine geeignete Viskosität für das Giessen erreicht wird. Das Pflanzenprotein mit dem Gellan weist dabei eine stark temperaturabhängige Konsistenz und Löslichkeit auf. Ein geeigneter Temperaturbereich mit entsprechendem Viskositätswert unter verschiedenen Niveaus von Scherspannung ist deshalb für Fleischimitatprodukte einen technisch entscheidender, aber nicht trivialer Faktor bei der Verarbeitung. Zudem ist es in der Praxis typischerweise nicht möglich, eine Referenzviskosität von einem Produkt auf ein anderes zu übertragen, da die Viskosität von vielen Faktoren abhängt, darunter Zusammensetzung, Konzentration, Temperatur, Scherraten und Druck. Dies erschwert die Bestimmung der notwendigen Viskosität und der entsprechenden Parameter. Die rheologischen Eigenschaften des Fleischimitats beim Giessen in die Form könnte z.B. mit flüssigem Honig bei Zimmertemperatur vergleichen werden, der eine Viskosität von etwa 2.000 bis 5.000 mPa ·s bei 20°C hat. Honig ist jedoch eine pseudoplastische nicht-Newtonsche Flüssigkeit (Viskosität nimmt mit steigender Scherrate ab), was vorliegend nicht unbedingt gegeben sein muss. Weiter ist Gellan ein natürlicher Polymer. Für sich genommen kann die Viskosität z.B. mit einem der bekannten Verfahren wie z.B. einem Brookfield-Viskosimeter bestimmt werden. Diese Methoden erlauben meist jedoch keine genaue temperaturabhängige Messung bei texturiertem Pflanzenproteinen in Kombination mit Gellan. Eine Temperatur von mindestens 90° ist auch aus weiteren Gründen bei texturiertem Pflanzenprotein wichtig und bildet den obgenannten überraschenden Effekt, da bei der Fähigkeit zur Imitatbildung die geeignete Viskoelastizität des Gellan eine wichtige Rolle spielt, um Partikel zu binden, Fett zu immobilisieren und Wasser in der Matrix des alternativen Proteinproduktes einzuschliessen.

Die folgende Tabelle zeigt beispielshaft die Aktivierungstemperatur in Abhängigkeit vom Ionengehalt des Wassers.

**Tabelle: Aktivierungstemperatur in Abhängigkeit vom Ionengehalt des Wassers**

| **Wasserqualität (Ionengehalt)** | **Maximum CaCO₃ Level (ppm)** | **Empfohlener Level für Natriumcitrat-Dihydrat** | **Minimum Hydratations-temperatur (°C)** | **Bemerkung** |
|---|---|---|---|---|
| Deionisiert | 0 | 0.07% | 22 | Bei gutem Rühren Hydratationszeit < 2 min |
| Weich | Bis zu 160 | 0.12% | 22 | Bei gutem Rühren Hydratationszeit < 2 min |
| Leicht hart | 161-320 | 0.16% | 22 | Mischen unter hoher Scherung zur Verkürzung der Rührzeit erforderlich |
| Hart | 321-460 | 0.20% | 28 | Mit hoher Scherung, -95% hydratisiert bei Raumtemperatur |
| Sehr hart | 460-920 | 0.34% | 58 | Für Hydratation Wärme erforderlich. Geliert beim Abkühlen ohne Zusatz von Ionen. |

Falls kein Komplexbildner eingesetzt wird, kann z.B. entionisiertes Wasser verwendet werden. Bei der vorliegenden Kombination mit Gellan im erfinderischen Bereich kann unter Umständen jedoch auch normales Wasser verwendet werden. Dazu wird auf die Ausführungen weiter unten verwiesen. Es sollte darauf geachtet werden, dass die Masse auch bei Zugabe der weiteren Rohstoffe nicht unter diese Temperatur gerät. Andernfalls würde das Gellan zu einem irreversiblen festen Gel im Mischbehälter erstarren.

Besonders vorteilhaft ist ein geschlossener Kocher mit Mantelheizung. Eine Vakuum-Einheit zieht die weiteren Zutaten zügig in die Masse. In einer bevorzugten Ausführungsvariante ist der Auslass sehr kurz und/oder geheizt, damit es nicht zu einer Abkühlung und einer daraus resultierenden Verstopfung kommt. Die Masse wird in die Formen gegossen und erstarrt sofort.

Das niedrig acylierte Gellan weist einen Bereich von 0.5-4 Gew.% in den Ausführungsvarianten auf. Wie bereits ausgeführt, spielt bei der Fähigkeit zur Imitatbildung die geeignete Viskoelastizität des Gellan eine wichtige Rolle, um Partikel zu binden, Fett zu immobilisieren und Wasser in der Matrix des alternativen Proteinproduktes einzuschliessen. Es gibt aber auch andere technische Gründe für den technischen Effekt bei der erfinderischen Obergrenze an Gellan: Bei höheren Gellankonzentrationen wird die Umwälzungen im Heizkessel während der Aufheizphase stark erschwert, da es eine hochviskose Masse in dieser Zeitspanne ist (vergleichbar mit einem festeren Kuchenteig oder weicheren Brotteig). Die Zutaten vermengen sich bei höheren Gellan Konzentrationen nicht richtig, was die Charakteristiken und Eigenschaften des Imitates beeinflusst bzw. verändert. Ausserdem ist die Wärmeverteilung bei höheren Gellan Konzentrationen beschränkt, was ebenfalls einen Einfluss auf die Charakteristiken und Eigenschaften des Aufschnittfleischimitates hat. Insbesondere ist die Wärmeleitung während der Aufheizphase kritisch. Wenn diese ungenügend ist, ergibt dies den Effekt, dass unten im Kessel die Masse schon flüssig wird und oben ist sie deutlich fester bzw. neigt zur Erstarrung. Damit ist der ganze Prozess fehlerhaft und man erhält kein Endprodukt.

Das Citrat kann insbesondere einen bevorzugten Bereich von 0.1-0.5 Gew.% in einer Ausführungsvariante aufweisen. Allerdings zeigen Versuche ohne Citran und zwei verschiedenen kalkhaltigen Wasser mit der erfindungsgemässen Gellankonzentration von 0.5-4 Gew.%, beispielsweise mit 3 Gew.%, überraschend, dass bei einem Verzicht von Natrium Citrat kein Unterschied sichtbar war. Der Herstellungsprozess und die Konsistenz waren vergleichbar mit den bisher durgeführten Versuchen. Das Wasser (Leitungswasser) aus Feldkirch (Schweiz), wo die Versuche durchgeführt wurden, hat bereits während der Zugabe von Komponente 3 zu einer Gelierung im Kessel geführt. Es war unmöglich diese Masse abzugiessen. Diese Ergebnisse der Versuche sind technisch überraschend, da diese gegen der in der Literatur und Prior Art zu findenden Effekte sprechen. In der Literatur, und typischerweise auch in den Lieferantenangabe von Gellan, wird stets darauf hingewiesen, dass Citrat verwendet werden muss/soll. Allerdings wurde weder in der Literatur noch in anderer Prior Art eine Rezeptur im erfindungsgemässen Bereich von Gellan mit 0.5-4 Gew.%, z.B. bei 3 Gew.% Gellan verwendet. Meist liegt der Gehalt deutlich darunter. Eine Erklärung dazu könnte sein, dass die Konzentration so hoch ist, dass das Gellan im Überschuss in der Masse vorhanden ist und die Ionen im Vergleich dazu im deutlich geringeren Umfang vorhanden sind. Quasi komplexiert der erfindungsgemässe Gehalt an Gellan schon selbst die Ionen. Allerdings ist dies nur ein Erklärungsversuch.

Das texturierte Pflanzenprotein kann z.B. einen Bereich von 3-30 Gew.% des gesamten Proteins von 3-30 Gew.% aufweisen. Die weiteren, z.B. pulverförmigen, pflanzlichen Proteine kann z.B. einen Bereich von 0-15 Gew.% in den Ausführungsvarianten aufweisen. Um die für ein Aufschnittprodukt gewünschten Charakteristiken und technischen Eigenschaften zu erreichen (insb. geschmacklich, haptisch, vom Proteingehalt, Konsistenz, Textur, Aussehen, ernährungsphysiologische Eigenschaften etc.), das erfinderische Aufschnittfleischimitat für das Pflanzenprotein auf texturierten Pflanzenproteine (TVP) und pflanzenprotein-basierte Fleischanaloga mit hohem Feuchtigkeitsgehalt basieren. Mit dem Gewichtsanteil an TVP kann die Konsistenz des Imitates angepasst werden. TVP-Produkte können z.B. in Form von Granulat, Flocken oder sogar in Streifen hergestellt werden. Um TVP-Produkte aus Trockentexturat zu verwenden, sollte es vor der Zubereitung allerdings zunächst in Wasser oder einer anderen Flüssigkeit eingeweicht werden. Sowohl TVP als auch die Weiteren pflanzlichen Proteine können z.B. mit Hilfe genauer Dosierer und einem Lebensmittelextruder hergestellt werden. Beispielsweise kann das Aufschnittfleischimitat 1 einen TVP-Gehalt im Produkt von nur 6% aufweisen. Der Gehalt an Proteinkonzentrat (Pulver), d.h. nicht texturiertem Protein, kann in diesem Beispiel z.B. bei 2% liegen. Das Endprodukt des erfindungsgemässen Aufschnittfleischimitat 1 hat insbesondere auch den Vorteil, dass es ein sog. "*High Protein*" Produkt darstellt, da 50% der Kalorien aus dem Protein kommen. Dies übersteigt den gesetzlichen Vorgaben von min. 20% für "*High Protein*" Produkte.

In einer Ausführungsvariante kann beispielsweise für die TVPs (texturierte Pflanzenproteine) faserige trockene Extrudate verwendet werden, die wahlweise z.B. auf Weizen-, Soja-, Erbse-, Hafer- oder Sonnenblumenprotein basieren oder eine Kombination dieser. In einer weitere Ausführungsvariante hat das nicht texturierte Protein, z.B. ein Protein Konzentrat Pulver, keine oder nur eine geringe Funktion. Der Vorteil, wenn angestrebt wird, dass das Proteinkonzentrat Pulver keine oder nur eine geringe Funktion besitzt, liegt u.a. im Folgenden: Störende Proteinfunktionalitäten können zum Beispiel in einer verdickenden oder gelbildenden Eigenschaft liegen. Verdickende Proteine wie zum Beispiel Erbsenprotein verändern die Viskosität der Masse während der Aufheizphase und eine gute Vermengung wird erschwert. Gelbildende Proteine wie z.B. Kartoffelprotein denaturieren bei Erreichung der entsprechenden Denaturierungstemperatur (ca. 60-75 °C), dies führt dazu, dass sichtbare und spürbare Proteinaggregate (kleine "Klümpchen") in der Masse sind, was untypisch für ein Aufschittfleischimitat sein kann, z.B. ein Kochschinkenaufschnittimitat ist.

In einer Ausführungsvariante werden geeignete Proteinkonzentrat Pulver als nicht-texturiertes Protein verwendet. Die Wahl des geeigneten Proteins kann stark vom Herstellverfahren abhängen. So kann es zu Beispiel sein, das ein Kartoffelprotein von einem Hersteller eine hohe Funktionalität besitzt und ein Gelnetzwerk bei entsprechenden Temperaturen ausbildet, während das Kartoffelprotein eines anderen Herstellers mit einem anderen Herstellungsverfahren durch vorherige Behandlung keine Funktionalität mehr besitzt. Dies Abhängigkeit des Herstellverfahrens von Proteinen besteht ebenso bei Weizen-, Soja-, Kichererbsen-, Hefe-, Hafer- und Erbsenprotein. Herstellverfahren von Protein Konzentrat Pulvern können physikalisch (z.B. Temperatur), enzymatisch (z.B. Hydrolyse), chemisch (pH-Einstellung) Verfahren sein.

In einer Ausführungsvariante wird in die aufzuheizende Masse mit Gellan und eventuell Citrat das texturierte Pflanzenprotein hinzugegeben, welches eine langfaserige Struktur besitzt. Dadurch kann beispielsweise, die faserige Textur, welche in Kochschinken oder Bündnerfleisch vorliegt, vorteilhaft nachgeahmt (imitiert) werden. Die Schnittfestigkeit wird durch die Menge des zugegebenen Gellans bestimmt, wobei die einzelnen Scheiben nicht zusammenkleben und sich gut voneinander trennen lassen. Wie im Fliessdiagramm veranschaulicht werden nach Erreichen der Aktivierungstemperatur von min. 90°C die weiteren Zutaten hinzugefügt. Als weitere Zutaten werden zumindest ein Farbstoffsystem (Paprikasaftkonzentrat und schwarzes Karottensaftkonzentrat), Gewürze, Aromen, Salz, gegebenenfalls eine Proteinquelle zugegeben werden.

Zur Texturierung des Aufschnittfleischimitat aus den Pflanzenproteinen kann z.B. auch eine Kochextrusion für den oben beschriebenen Prozess eingesetzt werden. Dabei kann z.B. ein Kochextruder mehrere Prozessschritte wie z.B. Mischen, Kneten, Kochen unter Eintrag von mechanischer Energie sowie einer Formgebung durch das Formgiessen, insb. durch vorgängiges Pressen durch eine Düse kombinieren. Gewünschte Texturen des Aufschnittfleischimitat können z.B. insbesondere durch die Parameter Wassergehalt, spezifisch mechanischem und thermischem Energieeintrag sowie Verweilzeit beeinflusst werden. Ziel ist es, eine möglichst Produktimitat zu erzeugen, die der Textur von Aufschnittfleisch ähnelt.

Mittels des oben beschrieben Verfahrens, insb. der Kochextrusion kann das Nasstexturate für die Formgiessung hergestellt werden. Als Ausgangsmaterial ideal sind Proteinkonzentrate und -isolate mit einer Proteinkonzentration mindestens 3-30 Gew.%. Als pflanzenprotein-basiertes Rohmaterial für die Texturierung des Aufschnittfleischimitat können z.B. Soja- und/oder Weizenproteine und/oder Erbsen- und/oder Lupinenproteine verwendet werden. Andere Pflanzenproteine sind ebenfalls möglich. Wird eine Aufschwemmung mit Wasser beim Rohmaterial verwendet, kann es zu einer alkalischen Extraktion kommen, bei welcher die Fasern von Protein und Stärke getrennt werden. Die Stärke kann, falls notwendig, durch Filtration und Zentrifugation vom alkalischen Proteinextrakt getrennt werden. Dieses kann z.B. entweder über isoelektrische Fällung bei einem pH-Wert von 4,5 oder Ultrafiltration weiter aufkonzentriert werden. So können, je nach gewünschten Eigenschaften des Aufschnittfleischimitates, Prozesses und verwendeten Leguminosensorte, Proteinzugaben mit gewünschten Konzentrationen erzeugt werden, insbesondere bis zu Grössenordnungen von 80 bis 95% Proteingehalt. Je nach Ausgangsfettgehalt der verarbeiteten Hülsenfrüchte kann es sinnvoll sein, das pflanzen-basierte Protein vorher zu entfetten.

Bei Verwendung von schlechter löslichen Proteinen kann es vorteilhaft sein, diese vor der Zugabe zur Masse mit pflanzlichem Fett zu einer Paste zu vermengen, um unerwünschte Nestbildungen zu verhindern. Diese Paste kann im ersten oder im zweiten Verfahrensschritt zugefügt werden.

In einem dritten Schritt wird die Produktionsmasse in Formen gegossen. Eine bevorzugte Form besteht aus beschichtetem Eisen oder aus Silikon und ist rechteckig oder halbrund. Eine weitere bevorzugte Form ist eine zu füllende Wursthülle aus einer Kunststofffolie, welche bevorzugt, wie bei der Wurstproduktion üblich, als Schlauch vorliegt.

In einem vierten Schritt wird die Produktionsmasse in der Form auf 5°C abgekühlt. Dabei wird durch die Gelierung des Gellans eine irreversible Verfestigung der Produktionsmasse erzielt, so dass diese schnittfest wird.

### Beispiel 1

Mit dem erfindungsgemässen Verfahren wurde ein pflanzenbasierter Aufschnitt als Imitat von Kochschinken hergestellt. Das Gellan (2.9 Gew.%) wurde mit Na-Citrat, Agar, Farbstoff und texturiertem Pflanzenprotein aufgekocht. In einem zweiten Schritt wurden nach Aktivierung des Gellans die weiteren Zutaten hinzugegeben ohne Abkühlung der Masse. Die Produktionsmasse wurde in einem dritten Schritt in eine Form gegossen. In einem vierten Schritt wurde die Produktionsmasse in der Form auf eine Temperatur von 5°C abgekühlt.

### Beispiel 2

Mit dem erfindungsgemässen Verfahren wurde ein pflanzenbasierter Aufschnitt als Imitat von Bündnerfleisch hergestellt. Das Gellan (2.9 Gew.%) wurde mit Na-Citrat, Farbstoff und texturiertem Pflanzenprotein aufgekocht. In einem zweiten Schritt wurden nach Aktivierung des Gellans die weiteren Zutaten hinzugegeben ohne Abkühlung der Masse. Die Produktionsmasse wurde in einem dritten Schritt in eine Form gegossen. In einem vierten Schritt wurde die Produktionsmasse in der Form auf eine Temperatur von 5°C abgekühlt. In einem fünften Schritt wird der pflanzenbasierte Aufschnitt bei 58°C für 48 Stunden getrocknet.

### Liste der Referenzzeichen

1 Pflanzenbasiertes Aufschnittfleischimitat
   11 Gellan
      111 Niedrig akyliertes Gellan
   12 Pflanzliche Basis
      121 Pflanzliches Protein
      1211 Texturiertes Pflanzenprotein
      1212 Pulverförmiges Proteinkonzentrat
   13 Weitere Zutaten
      131 Farbstoff(e)
      132 Aromen
      133 Salz
      134 Weitere pflanzliche Proteinquelle
      135 Ein oder mehrere Säuren
      136 Gewürze/Gewürzextrakte
      137 Haltbarkeitsverlängernde Zusätze
   14 Wasser
      141 Leitungswasser
      142 Komplexbildner
         1421 Natriumcitrat
   15 Agar
2 Herstellungsprozess
   21 Schritt 1 des Herstellungsprozesses
      211 Zusätzliches Hinzufügen von Natrium-Citrat
   22 Schritt 2 des Herstellungsprozesses
      221 Heater/Cooler
         2211 Temperatur
            22111 Aktivierungstemperatur
            22112 Temperaturbereich beim Mischen
         2212 Temperaturmesseinheit
      222 Mischer
         2221 Rotameter
      223 Zeitmesseinheit
   23 Schritt 3 des Herstellungsprozesses
   24 Schritt 4 des Herstellungsprozesses
3 Produktionsmasse
4 Formen
   41 Beschichtete Metallform
   42 Kunststoffschlauch

## Patentansprüche

1. Pflanzenbasiertes Aufschnittfleischimitat (1) enthaltend Gellan (11) und eine pflanzliche Basis (12) mindestens umfassend pflanzliches Protein (121), sowie ein Komplexbildner (142) und/oder Aroma (132) und/oder Farbstoff (131) und/oder Wasser (14), wobei ein pflanzenbasiertes Aufschnittfleischimitat eine pflanzenbasiertes Ersatzprodukt für Aufschnitt tierischer Herkunft ist und wobei Aufschnittfleischimitat ein Aufschnitt aus Fleischersatzprodukten ist, bei welchen von einem grösseren Stück oder Block eines Fleischersatzproduktes abgeschnittene und zum direkten Verzehr geeignete Scheiben erzeugt werden, **dadurch gekennzeichnet,**
**dass** das pflanzenbasiertes Aufschnittfleischimitat (1) als Gellan (11) ein niedrig-acyliertes Gellan (111) von mindestens 0.5 - 4 Gew.% umfasst, wobei das niedrig-acyliertes Gellan (111) ein Molekülgewicht von 200-300 kDa aufweist und im Wesentlichen keine Seitenketten aus Acetatgruppen und/oder Glyceratgruppen umfasst, und
**dass** das pflanzenbasiertes Aufschnittfleischimitat (1) pflanzliches Protein (121) von mindestens 3-30 Gew.% umfasst.

2. Pflanzenbasiertes Aufschnittfleischimitat (1) gemäss Anspruch 1, **dadurch gekennzeichnet, dass** das pflanzenbasiertes Aufschnittfleischimitat (1) als Komplexbildner (142) mindestens Natriumcitrat (1421) umfasst.

3. Pflanzenbasiertes Aufschnittfleischimitat (1) gemäss Anspruch 2, **dadurch gekennzeichnet, dass** das pflanzenbasiertes Aufschnittfleischimitat (1) Natriumcitrat (1421) mindestens im Bereich von 0.1-0.5 Gew.% umfasst.

4. Pflanzenbasiertes Aufschnittfleischimitat (1) gemäss einem der Ansprüche 1 bis 3, **dadurch gekennzeichnet, dass** das pflanzliche Protein (121) texturiertes Pflanzenprotein (1211) umfasst.

5. Pflanzenbasiertes Aufschnittfleischimitat (1) gemäss einem der Ansprüche 1 bis 4, **dadurch gekennzeichnet, dass** das pflanzliche Protein (121) pulverförmiges Proteinkonzentrat (122) als nicht texturiertes Protein umfasst.

6. Pflanzenbasiertes Aufschnittfleischimitat (1) gemäss Anspruch 5 **dadurch**
**gekennzeichnet, dass** das pflanzliche Protein (121) mindestens 3-30 Gew.% texturiertes Protein (1211) und 0-15 Gew.% weiteres Protein enthält.

7. Pflanzenbasiertes Aufschnittfleischimitat (1) gemäss einem der Ansprüche 1 bis 6, **dadurch gekennzeichnet, dass** das Aufschnittfleischimitat (1) Gewürze und/oder Gewürzextrakte (136) und/oder haltbarkeitsverlängernde Zusätze (137) enthält.

8. Pflanzenbasiertes Aufschnittfleischimitat (1) gemäss einem der Ansprüche 1 bis 7, **dadurch gekennzeichnet, dass** das pflanzenbasiertes Aufschnittfleischimitat (1) anstelle des Komplexbildner (142) und Wassers (14) entionisiertes Wasser umfasst.

9. Verfahren (2) zur Herstellung von pflanzenbasierten Aufschnittfleischimitaten (1) nach einem der Ansprüche 1 bis 8, wobei ein pflanzenbasiertes Aufschnittfleischimitat eine pflanzenbasiertes Ersatzprodukt für Aufschnitt tierischer Herkunft ist und wobei Aufschnittfleischimitat ein Aufschnitt aus Fleischersatzprodukten ist, bei welchen von einem grösseren Stück oder Block eines Fleischersatzproduktes abgeschnittene und zum direkten Verzehr geeignete Scheiben erzeugt werden, **dadurch gekennzeichnet,**
**dass** in einem ersten Schritt (21) eine Produktionsmasse (3) umfassend das niedrig acylierte Gellan (111) im Bereich von 0.5-4 Gew.%, Wasser (14) und eine pflanzliche Basis (12) umfassend mindestens ein pflanzliches Protein (121) im Bereich von 3-30 Gew.% und/oder Agar (15) und/oder ein Komplexbildner (142) auf min. 90°C erhitzt werden,
**dass** in einem zweiten Schritt (22) weitere Zutaten (13) mindestens umfassend Farbstoffe (131) und/oder Aromen (132) und/oder Salz (133) und/oder eine weitere pflanzliche Proteinquelle (134) und/oder Säuren (135) und/oder Gewürze (136) und/oder Gewürzextrakte (136) und/oder haltbarkeitsverlängernde Zusätze (137) vermischt und/oder zugefügt werden,
**dass** in einem dritten Schritt (23) die Produktionsmasse (3) in Formen (4) gegossen wird, und
**dass** in einem vierten Schritt (24) die Produktionsmasse (3) in den Formen (4) abgekühlt wird, so dass sich das Gellan (11) in den wahlweise geöffneten oder geschlossenen Formen (4) verfestigt.

10. Verfahren (2) zur Herstellung von pflanzenbasierten Aufschnittfleischimitaten (1) nach Anspruch 9, **dadurch gekennzeichnet, dass** die Produktionsmasse (3) im ersten Schritt (21) zusätzlich ein Komplexbildner (142) umfasst.

11. Verfahren (2) nach Anspruch 10, **dadurch gekennzeichnet, dass** der Komplexbildner (142) mindestens Natriumcitrat (1421) im Bereich von 0.1-0.5 Gew.% umfasst.

12. Verfahren (2) nach Anspruch 11, **dadurch gekennzeichnet, dass** bei Verwendung von Leitungswasser (141) als Wasser (14) im ersten Schritt (21) als Komplexbildner (142) mindestens Natriumcitrat (1421) im Bereich von 0.1-0.5 Gew.% zugefügt (211) wird.

13. Verfahren (2) nach einem der Ansprüche 9 bis 12, **dadurch gekennzeichnet, dass** das pflanzliche Protein (121) texturiertes Protein (1211) enthält.

14. Verfahren (2) nach Anspruch 13, **dadurch gekennzeichnet, dass** das pflanzliche Protein (121) texturiertes Protein (1211) in Bereich 3-30 Gew.% und nicht texturiertes Protein in Bereich von 0-15 Gew.% umfasst.

15. Verfahren (2) nach einem der Ansprüche 13 oder 14, **dadurch gekennzeichnet, dass** zumindest das texturierte Pflanzenprotein (1211) mit stumpfen Messern zerkleinert wird.

16. Verfahren (2) nach einem der Ansprüche 9 bis 15 **dadurch gekennzeichnet, dass** die weiteren Zutaten (13) nach Erreichen der Aktivierungstemperatur (2211) hinzugegeben werden.

17. Verfahren (2) nach einem der Ansprüche 9 bis 16, **dadurch gekennzeichnet, dass** die Aktivierungstemperatur (2211) während des Mischens auf mindestens 90°C gehalten wird.

18. Verfahren (2) nach einem der Ansprüche 9 bis 17, **dadurch gekennzeichnet, dass** das Verfahren (2) in einem geschlossenen System mit Mantelheizung und kurzem oder beheizten Auslass durchgeführt wird.

19. Verfahren (2) nach einem der Ansprüche 9 bis 18, **dadurch gekennzeichnet, dass** die Produktionsmasse (3) in eine beschichtete Metallform (4/41) oder einen Kunststoffschlauch (4/42) gegossen wird.

20. Verfahren (2) nach einem der Ansprüche 9 bis 18 **dadurch gekennzeichnet, dass** das Mischen in einem Mischer (222) in einem Temperaturbereich (2212) von 95-120°C und einer Zeit (223) von 1-20 Minuten mit anschliessender Kühlung auf 5°C erfolgt.

## Claims

1. Plant-based sliced meat imitation (1) containing gellan (11) and a plant-based base (12) comprising at least plant protein (121), as well as a complexing agent (142) and/or flavouring agent (132) and/or colouring agent (131) and/or water (14), wherein a plant-based sliced meat substitute is a plant-based substitute for sliced meat of animal origin and wherein a sliced meat substitute is a slice made from meat substitute products, in which slices suitable for direct consumption are produced by slicing from a larger piece or block of a meat substitute product, **characterised in**
**that** the plant-based sliced meat imitation (1) comprises, as gellan (11), a low-acylated gellan (111) of at least 0.5 - 4 wt.%, wherein the low-acylated gellan (111) has a molecular weight of 200-300 kDa and essentially comprises no side chains of acetate groups and/or glycerate groups, and
**that** the plant-based sliced meat imitation (1) comprises plant protein (121) of at least 3-30 wt.%.

2. Plant-based sliced meat imitation (1) according to claim 1, **characterised in that** the plant-based sliced meat imitation (1) comprises at least sodium citrate (1421) as a complexing agent (142).

3. Plant-based sliced meat imitation (1) according to claim 2, **characterised in that** the plant-based sliced meat imitation (1) comprises sodium citrate (1421) at least in the range of 0.1-0.5 wt%.

4. Plant-based sliced meat imitation (1) according to any one of claims 1 to 3, **characterised in that** the plant protein (121) comprises textured plant protein (1211).

5. Plant-based imitation sliced imitation (1) according to any one of claims 1 to 4, **characterised in that** the plant protein (121) comprises powdered protein concentrate (122) as a non-textured protein.

6. Plant-based sliced meat imitation (1) according to claim 5, **characterised in that** the plant protein (121) contains at least 3-30 wt.% textured protein (1211) and 0-15 wt.% additional protein.

7. Plant-based sliced meat imitation (1) according to any one of claims 1 to 6, **characterised in that** the sliced meat imitation (1) contains spices and/or spice extracts (136) and/or shelf-life-extending additives (137).

8. Plant-based sliced meat imitation (1) according to any one of claims 1 to 7, **characterised in that** the plant-based sliced meat imitation (1) comprises deionised water instead of the complexing agent (142) and water (14).

9. Method (2) for producing plant-based sliced meat imitations (1) according to any one of claims 1 to 8, wherein a plant-based sliced meat imitation is a plant-based substitute product for sliced meat of animal origin, and wherein a sliced meat imitation is sliced meat made from meat substitute products, in which slices suitable for direct consumption are produced by slicing from a larger piece or block of a meat substitute product, **characterised in**
**that** in a first step (21), a production mass (3) comprising the low acylated gellan (111) in the range of 0.5-4 wt.%, water (14) and a plant base (12) comprising at least one plant protein (121) in the range of 3-30 wt.% and/or agar (15) and/or a complexing agent (142) are heated to at least 90°C,
**that** in a second step (22), additional ingredients (13) are mixed and/or added, at least comprising colouring agents (131) and/or flavouring agents (132) and/or salt (133) and/or another plant protein source (134) and/or acids (135) and/or spices (136) and/or spice extracts (136) and/or shelf life-extending additives (137),
**that** in a third step (23) the production mass (3) is poured into moulds (4), and
**that** in a fourth step (24), the production mass (3) is cooled in the moulds (4), so that the gellan (11) solidifies in the optionally opened or closed moulds (4).

10. Method (2) for producing plant-based sliced meat imitations (1) according to claim 9, **characterised in that** the production mass (3) in the first step (21) additionally includes a complexing agent (142).

11. Method (2) according to claim 10, **characterised in that** the complexing agent (142) comprises at least sodium citrate (1421) in the range of 0.1-0.5 wt%.

12. Method (2) according to claim 11, **characterised in that** when using tap water (141) as water (14) in the first step (21), at least sodium citrate (1421) in the range of 0.1-0.5 wt.% is added (211) as a complexing agent (142).

13. Method (2) according to any one of claims 9 to 12, **characterised in that** the plant protein (121) contains textured protein (1211).

14. Method (2) according to claim 13, **characterised in that** the plant protein (121) comprises textured protein (1211) in the range of 3-30 wt.% and non-textured protein in the range of 0-15 wt.%.

15. Method (2) according to any one of claims 13 or 14, **characterised in that** at least the textured plant protein (1211) is comminuted with blunt knives.

16. Method (2) according to any one of claims 9 to 15, **characterised in that** the additional ingredients (13) are added after the activation temperature (2211) has been reached.

17. Method (2) according to any one of claims 9 to 16, **characterised in that** the activation temperature (2211) is maintained at at least 90°C during mixing.

18. Method (2) according to any one of claims 9 to 17, **characterised in that** the method (2) is carried out in a closed system with jacket heating and a short or heated outlet.

19. Method (2) according to any one of claims 9 to 18, **characterised in that** the production mass (3) is poured into a coated metal mould (4/41) or a plastic tube (4/42).

20. Method (2) according to any one of claims 9 to 18, **characterised in that** the mixing is carried out in a mixer (222) in a temperature range (2212) of 95-120°C and a time (223) of 1-20 minutes with subsequent cooling to 5°C.

## Revendications

1. Viande d'imitation en tranches à base de plantes (1) contenant de la gomme gellane (11) et une base végétale (12) comprenant au moins une protéine végétale (121), ainsi qu'un agent complexant (142) et/ou un arôme (132) et/ou un colorant (131) et/ou de l'eau (14), une viande d'imitation en tranches à base de plantes étant un produit de substitution à base de plantes pour de la charcuterie d'origine animale et la viande d'imitation en tranches étant une charcuterie à base de produits de substitution de viande, dans laquelle des tranches coupées d'un grand morceau ou bloc d'un produit de substitution de viande et appropriées pour une consommation directe sont produites, **caractérisée**
**en ce que** la viande d'imitation en tranches à base de plantes (1) comprend en tant que gomme gellane (11) une gomme gellane faiblement acylée (111) dans une proportion comprise au moins entre 0,5 et 4% en poids, la gomme gellane faiblement acylée présentant un poids moléculaire compris entre 200 et 300 kDa et ne comprenant essentiellement aucune chaîne latérale de groupes acétate et/ou de groupes glycérate, et
**en ce que** la viande d'imitation en tranches à base de plantes (1) comprend une protéine végétale (121) dans une proportion comprise au moins entre 3 et 30% en poids.

2. Viande d'imitation en tranches à base de plantes (1) selon la revendication 1, **caractérisée en ce que** la viande d'imitation en tranches à base de plantes (1) comprend au moins du citrate de sodium (1421) en tant qu'agent complexant (142).

3. Viande d'imitation en tranches à base de plantes (1) selon la revendication 2, **caractérisée en ce que** la viande d'imitation en tranches à base de plantes (1) comprend du citrate de sodium (1421) dans une proportion comprise au moins dans la plage de 0,1 à 0,5% en poids.

4. Viande d'imitation en tranches à base de plantes (1) selon l'une quelconque des revendications 1 à 3, **caractérisée en ce que** la protéine végétale (121) comprend une protéine végétale texturée (1211).

5. Viande d'imitation en tranches à base de plantes (1) selon l'une quelconque des revendications 1 à 4, **caractérisée en ce que** la protéine végétale (121) comprend un concentré protéique pulvérulent (122) en tant que protéine non texturée.

6. Viande d'imitation en tranches à base de plantes (1) selon revendication 5, **caractérisée en ce que** la protéine végétale (121) contient au moins 3 à 30% en poids d'une protéine végétale texturée (1211) et 0 à 15% en poids d'une autre protéine.

7. Viande d'imitation en tranches à base de plantes (1) selon l'une quelconque des revendications 1 à 6, **caractérisée en ce que** la viande d'imitation en tranches (1) contient des épices et/ou des extraits d'épices (136) et/ou des additifs prolongeant la durée de conservation (137).

8. Viande d'imitation en tranches à base de plantes (1) selon l'une quelconque des revendications 1 à 7, **caractérisée en ce que** la viande d'imitation en tranches à base de plantes (1) comprend de l'eau déionisée au lieu de l'agent complexant (142) et de l'eau (14).

9. Procédé (2) pour la production de viandes d'imitation en tranches à base de plantes (1) selon l'une quelconque des revendications 1 à 8, la viande d'imitation en tranches à base de plantes étant un produit de substitution à base de plantes pour de la charcuterie d'origine animale et la viande d'imitation en tranches étant une charcuterie à base de produits de substitution de viande, dans lequel des tranches coupées d'un grand morceau ou bloc d'un produit de substitution de viande et appropriées pour une consommation directe sont produites, **caractérisé**
**en ce que** dans une première étape (21) une masse de production (3) comprenant la gomme gellane faiblement acylée (111) dans une proportion comprise dans la plage de 0,3 à 4% en poids, de l'eau (14) et une base végétale (12) comprenant au moins une protéine végétale (121) dans une proportion comprise dans la plage de 3 à 30% en poids et/ou de l'agar (15) et/ou un agent complexant (142) est chauffée à une température d'au minimum 90°C,
**en ce que** dans une deuxième étape (22) d'autres ingrédients (13) comprenant au moins des colorants (131) et/ou des arômes (132) et/ou du sel (133) et/ou une autre source de protéines végétales (134) et/ou des acides (135) et/ou des épices (136) et/ou des extraits d'épices (136) et/ou des additifs prolongeant la durée de conservation (137) sont mélangés et/ou ajoutés,
**en ce que** dans une troisième étape (23) la masse de production (3) est coulée dans des moules (4), et
**en ce que** dans une quatrième étape (24) la masse de production (3) est refroidie dans les moules (4), de sorte que la gomme gellane (11) se solidifie dans les moules (4) ouverts ou fermés au choix.

10. Procédé (2) pour la production de viandes d'imitation en tranches à base de plantes (1) selon la revendication 9, **caractérisé en ce que** la masse de production (3) comprend en outre un agent complexant (142) dans la première étape (21).

11. Procédé (2) selon la revendication 10, **caractérisé en ce que** l'agent complexant (142) comprend au moins du citrate de sodium (1421) dans une proportion comprise dans la plage de 0,1 à 0,5% en poids.

12. Procédé (2) selon la revendication 11, **caractérisé en ce que**, en cas d'utilisation d'eau du robinet (141) en tant qu'eau (14) dans la première étape (21), au moins du citrate de sodium (1421) dans une proportion comprise dans la plage de 0,1 à 0,5% en poids est ajouté en tant qu'agent complexant (142).

13. Procédé (2) selon l'une quelconque des revendications 9 à 12, **caractérisé en ce que** la protéine végétale (121) contient une protéine texturée (1211).

14. Procédé (2) selon la revendication 13, **caractérisé en ce que** la protéine végétale (121) comprend une protéine texturée (1211) dans une proportion comprise dans la plage de 3 à 30% en poids et une protéine non texturée dans une proportion comprise dans la plage de 0 à 15% en poids.

15. Procédé (2) selon l'une quelconque des revendications 13 ou 14, **caractérisé en ce qu'**au moins la protéine végétale texturée (1211) est coupée avec des lames émoussées.

16. Procédé (2) selon l'une quelconque des revendications 9 à 15, **caractérisé en ce que** les autres ingrédients (13) sont ajoutés après l'atteinte de la température d'activation (2211).

17. Procédé (2) selon l'une quelconque des revendications 9 à 16, **caractérisé en ce que** la température d'activation (2211) est maintenue à au moins 90°C pendant le mélange.

18. Procédé (2) selon l'une quelconque des revendications 9 à 17, **caractérisé en ce que** le procédé (2) est effectué dans un système fermé comprenant un chauffage à gaine et une sortie courte ou chauffée.

19. Procédé (2) selon l'une quelconque des revendications 9 à 18, **caractérisé en ce que** la masse de production (3) est coulée dans un moule métallique revêtu (4/41) ou un tuyau en plastique (4/42).

20. Procédé (2) selon l'une quelconque des revendications 9 à 19, **caractérisé en ce que** le mélange est effectué dans un mélangeur (222) dans une plage de température (2212) comprise entre 95 et 120°C et durant un temps (223) compris entre 1 et 20 minutes avec un refroidissement ultérieur à 5°C.
